# EUROPEAN PATENT APPLICATION

(11) **EP 2 501 195 A1**
(43) Date of publication of application: **19.09.2012**
(21) Application number: 10830019.5
(22) Date of filing: 12.11.2010
(51) Int. Cl.: H04W 72/12, H04J 1/00, H04J 11/00

(54) **WIRELESS BASE STATION AND MOBILE COMMUNICATION METHOD**

(30) Priority: 13.11.2009 JP 2009260376
(71) Applicant: NTT DOCOMO, INC., Chiyoda-ku Tokyo 100-6150 (JP)
(72) Inventor: OKUBO, Naoto, Tokyo 100-6150 (JP); KIYOSHIMA, Kohei, Tokyo 100-6150 (JP); ISHII, Hiroyuki, Tokyo 100-6150 (JP)
(74) Representative: HOFFMANN EITLE
(86) International application number: PCT/JP2010/070199
(87) International publication number: WO 2011/059060

(57) **Abstract**

To avoid a reduction in a peak rate in an uplink as much as possible. A radio base station eNB according to the present invention includes a scheduling unit 12 configured to assign a PUCCH resource, a PUSCH resource, and a PRACH resource to a mobile station UE in a cell subordinate to the radio base station eNB, wherein, when the number of mobile stations UEs in the cell is 1, the scheduling unit 12 is configured to use at least one of the PUCCH resource and the PRACH resource as the PUSCH resource.

## Description

### TECHNICAL FIELD

The present invention relates to a radio base station and a mobile communication method.

### BACKGROUND ART

A logic peak rate in an LTE (Long Term Evolution) mobile communication system is decided by a "TBS (Transport Block Size) table".

However, in the above-mentioned mobile communication system, in an uplink, since RB (Resource Block) for PUCCH (Physical Uplink Control Channel) is ensured at both ends of a system bandwidth and six arbitrary RBs have been ensured as a PRACH (Physical Random Access Channel) resource, there is a problem that a peak rate may be reduced.

### SUMMARY OF THE INVENTION

Therefore, the present invention has been achieved in view of the above-described problems, and an object thereof is to provide a radio base station and a mobile communication method, by which it is possible to avoid a reduction in a peak rate in an uplink as much as possible.

A first characteristic of the present invention is summarized as a radio base station comprising: a scheduling unit configured to assign a resource for a physical uplink control channel for transmitting an uplink control signal, a resource for a physical uplink shared channel for transmitting an uplink data signal, and a resource for a physical random access channel to a mobile station in a cell subordinate to the radio base station, in which, when the number of mobile stations in the cell is 1, the scheduling unit is configured to use at least one of the resource for the physical uplink control channel and the resource for the physical random access channel as the resource for the physical uplink shared channel.

A second characteristic of the present invention is summarized as a mobile communication method comprising: a step of assigning, by a radio base station, a resource for a physical uplink control channel for transmitting an uplink control signal, a resource for a physical uplink shared channel for transmitting an uplink data signal, and a resource for a physical random access channel to a mobile station in a cell subordinate to the radio base station, in which , in the step, when the number of mobile stations in the cell is 1, the radio base station uses at least one of the resource for the physical uplink control channel and the resource for the physical random access channel as the resource for the physical uplink shared channel.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a diagram illustrating the channel configuration in an uplink of the mobile communication system according to the first embodiment of the present invention.
[Fig. 3] Fig. 3 is a functional block diagram of a radio base station according to the first embodiment of the present invention.
[Fig. 4] Fig. 4 is a flowchart illustrating an operation of the radio base station according to the first embodiment of the present invention.
[Fig. 5] Fig. 5 is a flowchart illustrating an operation of the radio base station according to the first embodiment of the present invention.

### BEST MODES FOR CARRYING OUT THE INVENTION

### (Configuration of mobile communication system according to first embodiment of the present invention)

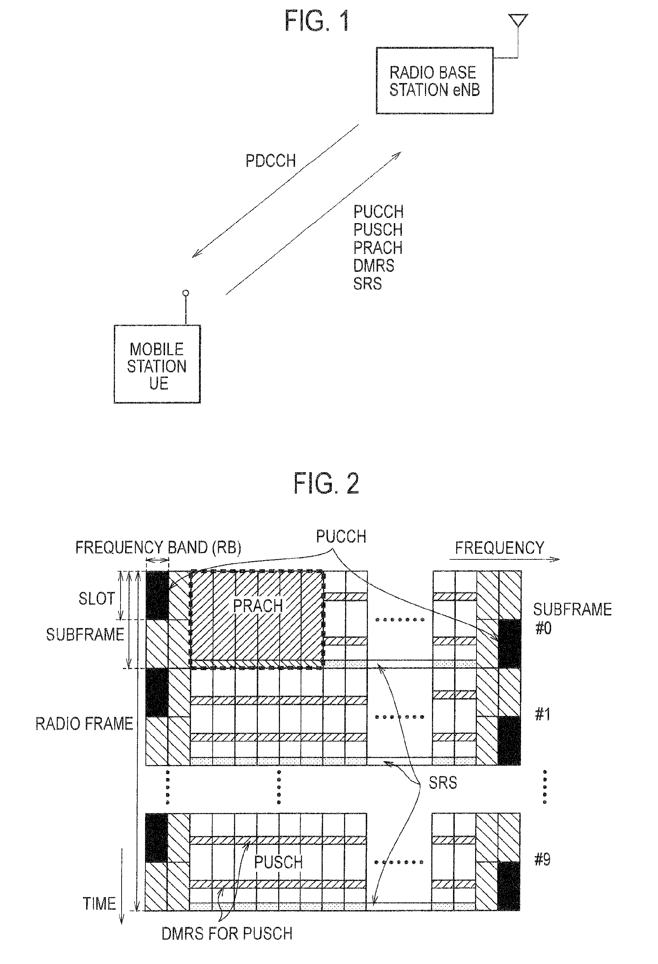

With reference to Fig. 1 to Fig. 3, the configuration of a mobile communication system according to a first embodiment of the present invention will be described.

The mobile communication system according to the present embodiment is an LTE mobile communication system, and includes a radio base station eNB and a mobile station UE as illustrated in Fig. 1.

In the mobile communication system according to the present embodiment, in a downlink, the radio base station eNB is configured to transmit a downlink control signal including a scheduling signal and the like through PDCCH (Physical Downlink Control Channel).

Furthermore, the mobile station UE is configured to transmit an uplink control signal through PUCCH, to transmit an uplink data signal through PUSCH (Physical Uplink Shared Channel), to transmit a random access procedure signal (for example, a RACH preamble) through PRACH, to transmit DMRS (DeModuration Reference Signal), and to transmit SRS (Sounding Reference Signal) used for measuring channel quality.

As illustrated in Fig. 2, six arbitrary RBs (1.08 MHz) are configured to be ensured as a PRACH resource in each cell.

Furthermore, a PUCCH resource is configured to be ensured at both ends of a system bandwidth through frequency hopping in a subframe.

Furthermore, an SRS resource is configured to be ensured at a final symbol of a subframe.

In addition, in the LTE mobile communication system, a time length of a radio frame is 10 ms, a time length of a subframe is 1 ms, and a time length of a slot is 0.5 ms. Furthermore, a frequency bandwidth of one RB is 180 kHz.

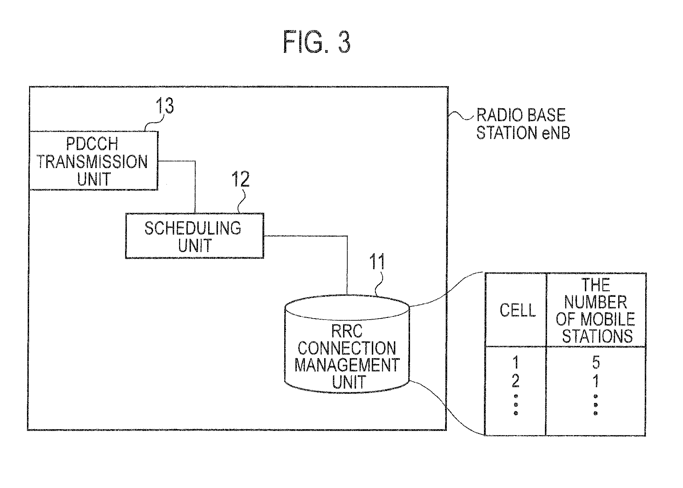

As illustrated in Fig. 3, the radio base station eNB includes an RRC connection management unit 11, a scheduling unit 12, and a PDCCH transmission unit 13.

The RRC connection management unit 11 is configured to manage the number of mobile stations UEs having established an RRC connection in each cell.

The scheduling unit 12 is configured to perform a scheduling process with respect to a mobile station UE in the cell subordinate to the radio base station eNB.

Here, when the number of mobile stations UEs in the cell is 1, the scheduling unit 12 may be configured to use at least one of the PUCCH resource and the PRACH resource as a PUSCH resource.

In addition, when the number of the mobile stations UEs in the cell is 1, the process for using at least one of the PUCCH resource and the PRACH resource as the PUSCH resource may be performed in each subframe (a unit period of a scheduling process, that is, the scheduling process is performed in each subframe) or may be performed in each predetermined time frame. "Each predetermined time frame", for example, may indicate each 100 ms or each second.

Furthermore, the number of the mobile stations UEs, for example, may include the number of mobile stations UEs having established an RRC connection (the number of RRC connected UEs), the number of mobile stations UEs in a Non-DRX state, the number of mobile stations UEs having data in a buffer, the number of mobile stations UEs subject to scheduling calculation, or the number of mobile stations UEs to which a shared channel is decided to be actually assigned.

Alternatively, in relation to the above-mentioned two or more number of mobile stations UEs is, it may be considered whether the number of the mobile stations UEs is 1.

In addition, the mobile stations UEs subject to the scheduling calculation may indicate mobile stations UEs to which a shared channel is to be probably assigned at the subframe, and may include both the mobile stations UEs to which the shared channel is actually assigned, and the mobile stations UEs to which the shared channel is not actually assigned.

Hereinafter, the following description will be given on the assumption that the number of the mobile stations UEs indicates the number of the mobile stations UEs having established the RRC connection.

That is, when a plurality of mobile stations UEs have established the RRC connection in the cell, the scheduling unit 12 may also be configured not to use both the PUCCH resource and the PRACH resource as the PUSCH resource.

For example, when the number of the mobile stations UEs having established the RRC connection in the cell is 1, the scheduling unit 12 may also be configured to use a fixedly ensured PUCCH resource (that is, RB) as the PUSCH resource.

In such a case, even when the number of the mobile stations UEs having established the RRC connection in the cell is 1, the scheduling unit 12 may also be configured not to use a fixedly ensured PRACH resource (that is, RB) as the PUSCH resource.

Here, in the cell, since only one mobile station UE having established the RRC connection transmits an uplink control signal through the PUCCH, even when the fixedly ensured PUCCH resource is used as the PUSCH resource as described above, an uplink control signal transmitted by another mobile station UE does not collide with an uplink data signal transmitted by the mobile station UE.

In such a case, when the timing, at which the PUCCH resource is used as the PUSCH resource, is the timing at which the mobile station UE transmits a transmission acknowledgement signal (ACK/NACK) through the PUCCH in response to a downlink data signal, the mobile station UE is configured to transmit the transmission acknowledgement signal (ACK/NACK) through the PUSCH.

Alternatively, when the number of the mobile stations UEs having established the RRC connection in the cell is 1, the scheduling unit 12 may also be configured to use the fixedly ensured PRACH resource (that is, the RB) as the PUSCH resource, in addition to the fixedly ensured PUCCH resource (that is, the RB).

When a mobile station UE in an idle state performs outgoing call, since the mobile station UE is configured to transmit the random access procedure signal through the PRACH, it is probable that the random access procedure signal transmitted through the PRACH collides with the uplink data signal transmitted through the PUSCH.

However, since power density of the random access procedure signal transmitted through the PRACH is considerably lower than power density of the uplink control signal transmitted through the PUSCH, even when the random access procedure signal has collided with the uplink control signal, it is assumed that the influence of deterioration of the uplink data signal transmitted through the PUSCH is small.

Meanwhile, when the random access procedure signal transmitted through the PRACH has not been detected in the radio base station eNB, the mobile station UE is configured to increase transmission power of the random access procedure signal by a step width called PowerRampingStep, and transmit the random access procedure signal through the PRACH at the next PRACH transmission timing.

As described above, if the transmission power of the random access procedure signal is increased by the step width called PowerRampingStep, even when the random access procedure signal has collided with the uplink data signal transmitted through the PUSCH, it is highly probable that the random access procedure signal is detected in the radio base station eNB. However, the probability that the uplink data signal transmitted through the PUSCH is correctly decoded is reduced, resulting in a problem that a rate in an uplink is reduced.

In order to avoid such a problem, the scheduling unit 12 may also be configured not to use a predetermined number Y of PRACH resources continuing in the time direction as the PUSCH resource in each predetermined cycle X.

That is, the scheduling unit 12 may also be configured not to use the PRACH resource as the PUSCH resource in each predetermined cycle X at the PRACH transmission timings which continues Y times.

For example, the scheduling unit 12 may also be configured not to use the PRACH resource as the PUSCH resource once in each 10 ms at the PRACH transmission timings which continues once or twice.

In addition, the scheduling unit 12 may also be configured to decide the amount of the PUCCH resource (for example, the number of RBs) based on the amount of the PUCCH resource actually used in the cell, or the number of the mobile stations UEs having established the RRC connection in the cell.

In such a case, the radio base station eNB is configured to notify the mobile station UE existing in the cell of the decided amount of the PUCCH resource (for example, the number of the RBs) by using broadcast information.

Furthermore, in such a case, in order to efficiently use the PUCCH resource, the scheduling unit 12 may also be configured to reassign the PUCCH resource individually assigned to each mobile station UE.

### (Operation of the mobile communication system according to the first embodiment of the present invention)

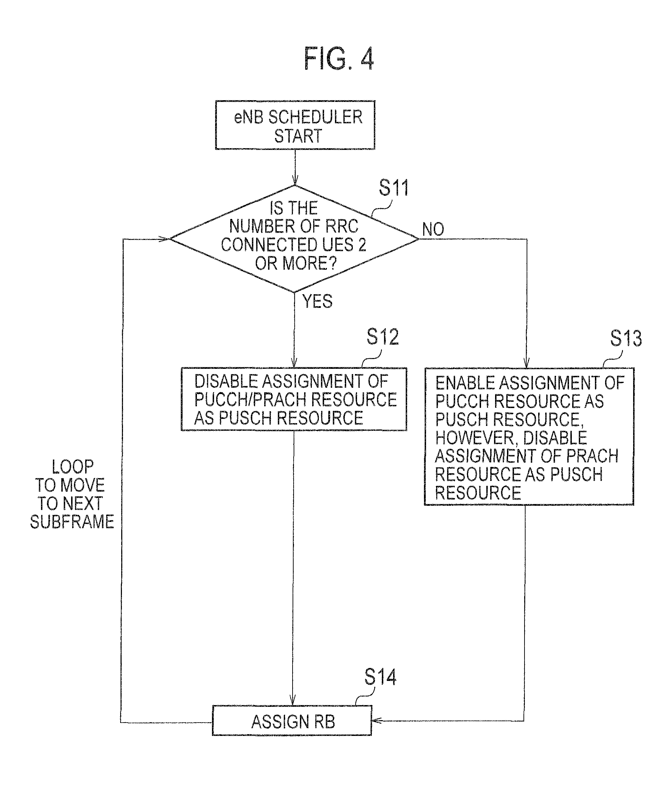

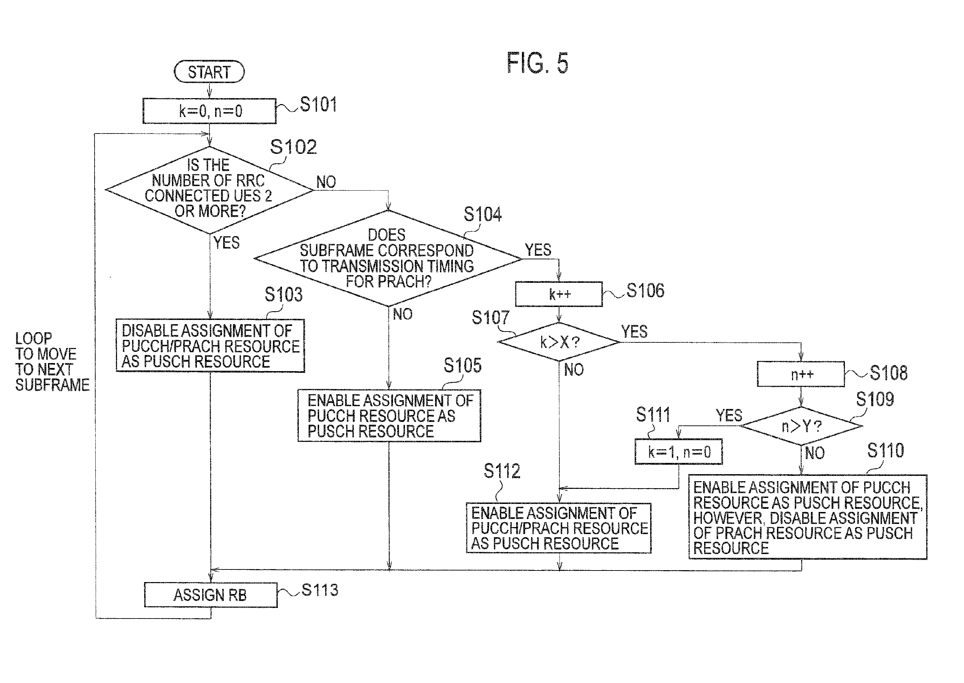

With reference to Fig. 4 and Fig. 5, the operation of the mobile communication system according to the first embodiment of the present invention, specifically, the operation of the radio base station eNB according to the first embodiment of the present invention will be described.

As illustrated in Fig. 4, in step S11, the radio base station eNB determines whether "the number of RRC connected UEs" in a cell is 2 or more at a target subframe, that is, determines whether the number of the mobile stations UEs having established an RRC connection in the cell is 1.

In the case of "YES", the present operation proceeds to step S12. In the case of "NO", the present operation proceeds to step S13.

The radio base station eNB determines that it is not possible to assign the PUCCH resource and the PRACH resource as the PUSCH resource in step S12, and assigns the PUSCH resource (that is, the RB) in step S 14.

The radio base station eNB determines that it is possible to assign the PUCCH resource as the PUSCH resource in step S13, and assigns the PUSCH resource (that is, the RB) in step S14.

As illustrated in Fig. 5, the radio base station eNB sets "k = 0" and "n = 0" in step S101, and determines whether "the number of RRC connected UEs" in the cell is 2 or more at a target subframe, that is, determines whether the number of the mobile stations UEs having established an RRC connection in the cell is 1 in step S102.

In the case of "YES", the present operation proceeds to step S103. In the case of "NO", the present operation proceeds to step S104.

The radio base station eNB determines that it is not possible to assign the PUCCH resource and the PRACH resource as the PUSCH resource in step S103, and assigns the PUSCH resource (that is, the RB) in step S113.

In step S104, the radio base station eNB determines whether the target subframe corresponds to the PRACH transmission timing.

In the case of "YES", the present operation proceeds to step S106. In the case of "NO", the present operation proceeds to step S105.

The radio base station eNB determines that it is possible to assign the PUCCH resource as the PUSCH resource in step S105, and assigns the PUSCH resource (that is, the RB) in step S113.

The radio base station eNB increases the "k" by "1" in step S106, and determines whether "k > X" is satisfied in step S107. Here, the "X" denotes the above-mentioned predetermined cycle.

In the case of "YES", the present operation proceeds to step S108. In the case of "NO", the present operation proceeds to step S112.

The radio base station eNB increases the "n" by "1" in step S108, and determines whether "n > Y" is satisfied in step S109. Here, the "Y" denotes the above-mentioned predetermined number.

In the case of "YES", the present operation proceeds to step S111. In the case of "NO", the present operation proceeds to step S110.

The radio base station eNB determines that it is possible to assign the PUCCH resource as the PUSCH resource but it is not possible to assign the PRACH resource as the PUSCH resource in step S110, and assigns the PUSCH resource (that is, the RB) in step S113.

The radio base station eNB sets "k = 1" and "n = 0" in step S111, determines that it is possible to assign the PUCCH resource and the PRACH resource as the PUSCH resource in step S112, and assigns the PUSCH resource (that is, the RB) in step S113.

### (Operation and Effect of the mobile communication system according to the first embodiment of the present invention)

In accordance with the mobile communication system according to the first embodiment of the present invention, when the number of mobile stations UEs having established an RRC connection in a cell is 1, that is, in a congestion-free state, the PUCCH resource and the PRACH resource are assigned as the PUSCH resource, so that it is possible to minimize a reduction in the above-mentioned peak rate.

The characteristics of the present embodiment as described above may be expressed as follows.

A first characteristic of the present embodiment is summarized in that a radio base station eNB includes: a scheduling unit 12 configured to assign a PUCCH (physical uplink control channel for transmitting an uplink control signal) resource, a PUSCH (physical uplink shared channel for transmitting an uplink data signal) resource, and a PRACH (physical random access channel) resource to a mobile station UE in a cell subordinate to the radio base station eNB, wherein, when the number of mobile stations UEs in the cell is 1, the scheduling unit 12 is configured to use at least one of the PUCCH resource and the PRACH resource as the PUSCH resource.

In the first characteristic of the present embodiment, the number of the above-mentioned mobile stations UEs, for example, may include the number of mobile stations UEs having established an RRC connection in the cell (the number of RRC connected UEs), the number of mobile stations UEs in a Non-DRX state, the number of mobile stations UEs having data in a buffer, the number of mobile stations UEs subject to scheduling calculation, or the number of mobile stations UEs to which a shared channel is decided to be actually assigned.

In addition, the mobile stations UEs subject to the scheduling calculation may indicate mobile stations UEs to which a shared channel is to be probably assigned at the subframe, and may include both the mobile stations UEs to which the shared channel is actually assigned, and the mobile stations UEs to which the shared channel is not actually assigned.

In the first characteristic of the present embodiment, the scheduling unit 12 may also be configured not to use the PRACH resource as the PUSCH resource.

For example, the scheduling unit 12 may also be configured not to use a predetermined number of the PRACH resources continuing in the time direction as the PUSCH resource in each predetermined cycle.

A second characteristic of the present embodiment is summarized in that a mobile communication method includes: a step of assigning, by a radio base station eNB, a PUCCH resource, a PUSCH resource, and a PRACH resource to a mobile station UE in a cell subordinate to the radio base station eNB, wherein, in the step, when the number of mobile stations UEs in the cell is 1, the radio base station eNB uses at least one of the PUCCH resource and the PRACH resource as the PUSCH resource.

In the second characteristic of the present embodiment, the number of the above-mentioned mobile stations UEs, for example, may include the number of mobile stations UEs having established an RRC connection in the cell (the number of RRC connected UEs), the number of mobile stations UEs in a Non-DRX state, the number of mobile stations UEs having data in a buffer, the number of mobile stations UEs subject to scheduling calculation, or the number of mobile stations UEs to which a shared channel is decided to be actually assigned.

In addition, the mobile stations UEs subject to the scheduling calculation may indicate mobile stations UEs to which a shared channel is to be probably assigned at the subframe, and may include both the mobile stations UEs to which the shared channel is actually assigned, and the mobile stations UEs to which the shared channel is not actually assigned.

In the second characteristic of the present embodiment, when the PUCCH resource is used as the PUSCH resource, one mobile state UE having established an RRC connection may transmit a transmission acknowledgement signal using the PUSCH resource in response to a downlink data signal.

In the second characteristic of the present embodiment, in the above-mentioned step, the radio base station eNB may not use the PRACH resource as the PUSCH resource.

For example, in the above-mentioned step, the radio base station eNB may not use a predetermined number of the PRACH resources continuing in the time direction as the PUSCH resource in each predetermined cycle.

A third characteristic of the present embodiment is summarized as a mobile station UE, in which a PUCCH resource is used as a PUSCH resource, if only one mobile state UE has established an RRC connection, the mobile state UE may be configured to transmit a transmission acknowledgement signal using a resource of the PUSCH resource in response to a downlink data signal.

It is noted that the operation of the above-described the radio base station eNB or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station eNB or the mobile station UE. Further, such a storage medium or a processor may be arranged, as a discrete component, in the radio base station eNB or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### Industrial Applicability

As described above, in accordance with the present invention, it is possible to provide a radio base station and a mobile communication method, by which it is possible to avoid a reduction in a peak rate in an uplink as much as possible.

## Claims

1. A radio base station comprising: a scheduling unit configured to assign a resource for a physical uplink control channel for transmitting an uplink control signal, a resource for a physical uplink shared channel for transmitting an uplink data signal, and a resource for a physical random access channel to a mobile station in a cell subordinate to the radio base station, wherein,
when the number of mobile stations in the cell is 1, the scheduling unit is configured to use at least one of the resource for the physical uplink control channel and the resource for the physical random access channel as the resource for the physical uplink shared channel.

2. The radio base station according to claim 1, wherein
the number of mobile stations is at least one of: the number of mobile stations UEs having established an RRC connection, the number of mobile stations in a Non-DRX state, the number of mobile stations having data in a buffer, the number of mobile stations subject to scheduling calculation, or the number of mobile stations to which a shared channel is decided to be actually assigned.

3. The radio base station according to claim 1, wherein
the scheduling unit is configured not to use the resource for the physical random access channel as the resource for the physical uplink shared channel.

4. A mobile communication method comprising: a step of assigning, by a radio base station, a resource for a physical uplink control channel for transmitting an uplink control signal, a resource for a physical uplink shared channel for transmitting an uplink data signal, and a resource for a physical random access channel to a mobile station in a cell subordinate to the radio base station,
wherein, in the step, when the number of mobile stations in the cell is 1, the radio base station uses at least one of the resource for the physical uplink control channel and the resource for the physical random access channel as the resource for the physical uplink shared channel.

5. The mobile communication method according to claim 4, wherein
the number of mobile stations UEs is at least one of: the number of mobile stations UEs having established an RRC connection, the number of mobile stations in a Non-DRX state, the number of mobile stations having data in a buffer, the number of mobile stations subject to scheduling calculation, or the number of mobile stations to which a shared channel is decided to be actually assigned.

6. The mobile communication method according to claim 4, wherein
in the step, the radio base station does not use the resource for the physical random access channel as the resource for the physical uplink shared channel.
